# EUROPÄISCHE PATENTANMELDUNG

(11) **EP 0 659 825 A2**
(43) Veröffentlichungstag der Anmeldung: **28.06.1995**
(21) Anmeldenummer: 94116516.9
(22) Anmeldetag: 20.10.1994
(51) Int. Cl.: C08L 23/16

(54) **Thermoplastische Polyesterelastomere und Verfahren zu ihrer Herstellung**

(30) Priorität: 21.12.1993 DE 4343587
(71) Anmelder: HÜLS AKTIENGESELLSCHAFT, D-45764 Marl (DE)
(72) Erfinder: Schmidt, Friedrich Georg, Dr., D-45721 Haltern (DE); Beyer, Horst, D-45527 Hattingen (DE); Grosse-Puppendahl, Thomas, D-45721 Haltern (DE); Kleine Homann, Walter, Dr., D-48249 Dülmen (DE); Neu, Thomas, Dr., D-48249 Dülmen (DE)

(57) **Zusammenfassung**

Es sollten thermoplastische Elastomere auf Basis von Blends aus thermoplastischen aromatischen Polyestern und dynamisch vulkanisiertem EP(D)M-Kautschuk hergestellt werden, bei denen der Kautschuk nicht vorher funktionalisiert werden muß.

Diese Aufgabe wird dadurch gelöst, daß ein Gemisch, das folgende Komponenten enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels,
durch dynamische Vulkanisation zu einem thermoplastischen Elastomeren umgesetzt wird.

Die erfindungsgemäßen Polyesterelastomere besitzen ein gutes Rückstellvermögen.

## Beschreibung

Gegenstand der vorliegenden Erfindung sind Blends aus thermoplastischen aromatischen Polyestern und dynamisch vulkanisiertem EPM- oder EPDM-Kautschuk, die Verwendung als thermoplastische Elastomere (TPE) finden. Ein weiterer Gegenstand dieser Erfindung ist ein Verfahren zur Herstellung derartiger thermoplastischer Elastomere.

Thermoplastische Elastomere sind Werkstoffe, bei denen eine weiche, elastomere Phase in eine harte Matrix eingebunden ist. Man unterscheidet grob in zwei Kategorien: zum einen Blockcopolymere, wie z. B. Styrol-Ethylen-Butylen-Styrol-Blockcopolymere oder auch Polyetherester aus Polybutylenterephthalat- und Polytetrahydrofuran-Segmenten, und zum anderen Polymerblends mit separierten, jedoch miteinander in der Regel verknüpften Phasen.

Die thermoplastischen Elastomeren des letzteren Typs werden häufig durch dynamische Vulkanisation hergestellt, wie es unter anderem von A. Y. Coran et al. in Rubber Chem. Technology **55**, 116 (1982) beschrieben wurde. Man kennt diverse Kombinationsmöglichkeiten von Elastomeren und Thermoplasten, so z. B. EPDM mit Polypropylen, NBR mit Polyamiden oder Polyethylen, Glycidylmethacrylat-modifiziertes EPDM mit Polybutylenterephtalat etc. (siehe z. B. auch A. J. Moffett und M. E. J. Dekkers, Polymer Eng. Sci. **32**, 1 (1992); WO-A-91/19 765; EP-A-0 274 744; EP-A-0 400 890; EP-A-0 309 800; WO-A-88/05 452; WO-A-92/18 570; WO-A-88/03 543; EP-A-0 480 770 und US 4 141 863).

Dabei muß jedoch zur Erzielung der typischen TPE-Eigenschaften, insbesondere eines guten Rückstellvermögens, die Kautschukkomponente in der Regel so modifiziert werden, daß die Phasen verträglich werden bzw. eine Phasenverknüpfung stattfindet; dies ist gleichzeitig Voraussetzung dafür, daß die gewünschte disperse Verteilung des Kautschuks während der dynamischen Vulkanisation erhalten wird. Erreicht wird dies beispielsweise durch Pfropfung von Glycidylmethacrylat, Maleinsäureanhydrid oder ähnlich aktiver α,β-ungesättigter Carbonylverbindungen auf den Kautschuk. Eine derartige Funktionalisierung der Kautschukkomponente ist jedoch aufwendig und teuer. Sie ist zudem mit der Gefahr der Emission toxischer Monomere verbunden, was entsprechende Sicherheitsvorkehrungen erfordert.

Daher bestand die Aufgabe darin, thermoplastische Elastomere mit gutem Rückstellvermögen auf Basis von Blends aus thermoplastischen aromatischen Polyestern und dynamisch vulkanisiertem EPDM- oder EPM-Kautschuk herzustellen, bei denen der Kautschuk nicht vorher funktionalisiert werden muß.

Überraschend wurde nun gefunden, daß diese Aufgabe dadurch gelöst werden kann, daß ein Gemisch, das folgende Komponenten enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels,
durch dynamische Vulkanisation, d. h. Vulkanisation während des Schmelzemischens, zu einem thermoplastischen Elastomeren umgesetzt wird.

Die erfindungsgemäß verwendeten EP(D)M-Kautschuke können nach bekannten Verfahren hergestellt werden.

Der EPM-Kautschuk wird in bekannter Weise durch katalytische Polymerisation eines Gemisches aus 25 - 75 Gew.-% Ethylen und 75 - 25 Gew.-% Propylen hergestellt.

Der EPDM-Kautschuk wird durch Polymerisation eines Gemisches aus
mehr als 25 Gew.-% Ethylen
mehr als 25 Gew.-% Propylen und
bis 10 Gew.-%, insbesondere 1 bis 3 Gew.-% eines vorzugsweise nicht konjugierten Diens wie Bicyclo(2.2.1)-heptadien, Hexadien-1,4, Dicyclopentadien und insbesondere 5-Ethylidennorbornen
hergestellt.

Im Rahmen der vorliegenden Erfindung können bis zu 90 Gew.-% und bevorzugt bis zu 70 Gew.-% des EP(D)M-Kautschuks durch andere Kautschuke wie zum Beispiel NBR, Acrylatkautschuk, Polyoctenamer, SB-Kautschuk (als E-SBR oder L-SBR), Butadienkautschuk (BR), Naturkautschuk (NR), Isoprenkautschuk (IR), Isobuten-Isopren-Kautschuk (IIR), der auch in halogenierter Form (CIIR bzw. BIIR) vorliegen kann, Chloropren-Kautschuk (CR) und/oder ein styrolhaltiges Blockcopolymer wie beispielsweise SB, SBS, SIS oder SEBS ersetzt werden. Derartige Kautschuke sind dem Fachmann wohlbekannt, so daß sich eine genauere Beschreibung erübrigt. Die inhärenten Eigenschaften der erfindungsgemäßen Polyesterelastomere können somit durch Einbringen der Charakteristika der anderen Kautschuke, falls gewünscht, modifiziert werden.

Die aliphatische Doppelbindungen enthaltenden thermoplastischen Polyester werden in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl]. "Polymer Chemistry", Interscience Publ., New York, 1961, S. 111 - 127; Kunststoffhandbuch, Band VIII, C. Hanser Verlag, München, 1973 und Journal of Polymer Science, Part A1, **4**, Seiten 1851 - 1859 (1966)].

Geeignete aromatische Dicarbonsäuren sind z. B. Phthalsäure, Iso- und Terephthalsäure bzw. deren Ester. Die aromatischen Dicarbonsäuren können teilweise durch aliphatische und/oder cycloaliphatische Dicarbonsäuren mit bis zu 12 C-Atomen ersetzt sein. Beispielhaft seien Cyclohexan-1,4-dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren genannt.

Als Diolkomponente eignen sich beispielsweise
- Diole der allgemeinen Formel HO-(CH₂)ₙ-OH mit n = 2 bis 12, wie z. B. Ethylenglykol, Propandiol-(1,3), Butandiol-(1,4) und Hexandiol-(1,6),
- Neopentylglykol
- 1,4-Cyclohexandimethanol
- ungesättigte Diole, wie z. B. Butendiol-(1,4).

Ein Teil dieser Diole kann durch ein Poly(oxyalkylen)diol mit einem Molekulargewicht bis 3 000, wie z. B. Poly(oxyethylen)diol oder Poly(oxytetramethylen)diol, oder durch verzweigte Alkylendiole, wie z. B. 2-Methyl-1,4-butandiol, ersetzt sein.

Die erfindungsgemäß eingesetzten Polyester weisen sinnvollerweise eine Viskositätszahl J, gemessen nach DIN 53 728 bei 25 °C an einer Lösung in Phenol/1,2-Dichlorbenzol (50 : 50, w/w) mit einer Konzentration von 5 g/l, im Bereich von 80 bis 240 cm³/g auf.

In einer bevorzugten Ausführungsform verwendet man Polyester mit einer Dicarbonsäurekomponente auf Basis von Terephthalsäure und einer Diolkomponente, die zu 0 bis 99,9 Mol-% aus Butandiol-(1,4) und zu 0,1 bis 100 Mol-% aus Butendiol-(1,4) besteht. Besonders bevorzugt besteht die Diolkomponente aus 50 bis 99 Mol-% Butandiol-(1,4) und 1 bis 50 Mol-% Butendiol-(1,4).

Als unmodifizierter Polyester soll ein lineares, film- oder faserbildendes teilkristallines Kondensationsprodukt aus aromatischen Dicarbonsäuren mit 8 bis 14 C-Atomen und mindestens einem Diol der Formel HO-(CH₂)ₙ-OH mit n = 2 bis 12, wie z. B. Ethylenglykol, Propandiol-(1,3), Butandiol-(1,4) und Hexandiol-(1,6), und/oder Neopentylglykol und/oder 1,4-Cyclohexandimethanol verwendet werden. Bis 20 Mol-% der aromatischen Dicarbonsäure können durch (cyclo)aliphatische Dicarbonsäuren mit 2 bis 12 C-Atomen ersetzt werden. Bevorzugte Polyester stellt die Gruppe der Poly(alkylenterephthalate) dar. Als Poly(alkylenterephthalate) werden neben Poly(propylenterephthalat) bevorzugt Poly(ethylenterephthalat) und Poly(butylenterephthalat) eingesetzt. Bis zu 20 Mol-%, vorzugsweise bis zu 15 Mol-% der Terephthalsäure im Poly(alkylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1,4-dicarbonsäure, Adipinsäure, Sebacinsäure, Azelainsäure, Decandicarbonsäure o. ä. Als Diolkomponenten können auch Poly(oxyalkylen)diole wie z. B. Poly(oxytetramethylen)diol oder verzweigte Alkylendiole, wie z. B. 2-Methyl-1,4-butandiol, eingesetzt werden.

Auch hier weisen die erfindungsgemäß eingesetzten Polyester eine Lösungsviskosität J im Bereich von 80 bis 240 cm³/g auf.

Geeignete Weichmacheröle sind insbesondere naphthenische und/oder aliphatische Öle oder spezielle, in der Kautschuktechnologie übliche Weichmacher, wie z. B. Polyalkoholfettsäureester oder Thioether in einer Menge von vorzugsweise bis zu 100 Gewichtsteilen, bezogen auf 100 Gewichtsteile Kautschuk.

Als Verstärkungsmittel eignen sich alle Stoffe, die üblicherweise als Füllstoffe in Kautschuken eingesetzt werden, wie z. B. Ruß, Kieselsäure, Silikate, Calciumcarbonat wie etwa Kreide, Talkum, Kaolin oder Zinkoxid.

Die thermoplastischen Polyesterelastomere können darüber hinaus weitere Zusätze enthalten, wie z. B. übliche Vulkanisationsverzögerer oder -beschleuniger, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 25 Gew.-Teile aus.

Als Vernetzungsmittel kann jedes konventionelle Vulkanisationsmittel verwendet werden, darunter auch die freie Radikale erzeugenden Mittel wie Perketale (z. B. Hexamethyl-tetraoxa-cyclononan), Azoverbindungen [z. B. Azo-bis(2-acetoxy-propan)] und Peroxide, aromatischer oder aliphatischer Natur, wie die aromatischen Diacylperoxide und die aliphatischen Diacylperoxide, die Peroxide von zweibasigen Säuren, Ketonperoxide, Alkylperoxiester, Alkylhydroperoxide (z. B. Diacetylperoxid, Dibenzoylperoxid, Bis-2,4-dichlorbenzoylperoxid, Di-tert.-butylperoxid, Dicumylperoxid, tert.-Butylperbenzoat, tert.-Butylcumylperoxid, 2,5-Bis-(tert.-butylperoxi)-2,5-dimethylhexan, 2,5-Bis-(tert.-butylperoxi)-2,5-dimethylhexin-(3), 4,4,4',4'-Tetra-(tert.-butylperoxi)-2,2-dicyclohexylpropan, 1,4-Bis-(tert.-butylperoxi-isopropyl)-benzol, 1,1-Bis-(tert.-butylperoxi)-3,3,5-trimethylcyclohexan, Lauroylperoxid, Bernsteinsäureperoxid, Cyclohexanonperoxid, tert.-Butylperacetat und dergleichen mehr.

Geeignet sind auch die Vulkanisationsmittel bzw. Vulkanisationshilfsmittel vom Typ der Azide, wie z. B. die Azidoformiate, aromatische Polyazide und Sulfonazide und andere mehr. Ebenso können Anwendung finden die Aldehyd-Amin-Reaktionsprodukte (wie z. B. Hexamethylentetramin, Formaldehyd-Ammoniak, Formaldehyd-Ethylchlorid-Ammoniak und ähnliches), die substituierten Harnstoffe (z. B. Trimethylthioharnstoff, Diethylthioharnstoff, Dibutylthioharnstoff, Tripentyl-thioharnstoff, N,N'-Diphenylthioharnstoff), Guanidine (z. B. Diphenylguanidin, Diphenylguanidin-phthalat und das Di-o-tolylguanidin-Salz des Dibrenzkatechin-borates und ähnliche), Xanthogenate (wie z. B. das Natrium-Isopropylxanthogenat und ähnliche), Dithiocarbamate (wie z. B. Zink-Isopropyl-octyl-dithiocarbamat und andere), Imidazole, Sulfenamide, Thiuramdisulfide und ebenso p-Chinondioxim und andere.

Als Vulkanisationsmittel kann natürlich auch Schwefel selbst verwendet werden (vgl. hierzu Kirk-Othmer, Encyclopedia of Chemical Technology, Band 20, 3. Auflage, S. 337 - 364, Interscience Publishers, 1982). Das Peroxid-Vulkanisationsmittel kann allein verwendet werden oder in Gemeinschaft mit den üblichen Hilfsstoffen wie Schwefel, Maleimide einschließlich der Bis-maleimide, mehrfach ungesättigten Verbindungen (z. B. Cyanurat), Acrylsäureestern (z. B. Trimethylolpropan-trimethacrylat) und dergleichen mehr. Wird Schwefel als Vulkanisationsmittel verwendet (sei es nun in Form von elementarem Schwefel selbst oder als Schwefel in Form eines schwefelabgebenden Mittels), so ist es für gewöhnlich empfehlenswert, einen Beschleuniger der Schwefel-Vulkanisation und ebenso einen Aktivator (z. B. ein Metallsalz oder -oxid) mitzuverwenden, wie es übliche Praxis ist. Gewünschtenfalls können auch gemischte Peroxid-Vulkanisationssysteme oder gemischte Schwefel-Vulkanisationssysteme verwendet werden, z. B. Dicumylperoxid plus 2,5-Bis-(tert.-butyl-peroxi)-2,5-dimethylhexan oder Schwefel plus Tetramethylthiuramdisulfid.

Ferner können als Vernetzungsmittel auch die gängigen phenolischen Härtungssysteme verwendet werden.

Die geeigneten Vernetzungsmittel sind ausführlich beschrieben in W. Hofmann, "Vulcanization and Vulcanizing Agents", Palmerton Publishing G., New York, 1967. Die Herstellung der Kautschukmischungen wird beispielsweise von F. W. Barrow in "Rubber Compounding", Marcel Dekker Inc., New York und Basel, 1988 oder bei W. Kleemann in "Mischungen für die Elastverarbeitung", VEB Deutscher Verlag für Grundstoffindustrie, 1982, beschrieben.

Bei Verwendung von EPDM, das wegen der Dienkomponente eine gewisse Ungesättigtkeit aufweist, kann die breiteste Auswahl an Vernetzungsmitteln eingesetzt werden. Arbeitet man hingegen mit EPM, so ist man auf die Verwendung von Vernetzungsmitteln, die freie Radikale erzeugen, wie z. B. Peroxide, angewiesen.

Das Vernetzungsmittel wird in einer Menge eingesetzt, die nicht ausreicht, um eine vollständige Vulkanisation der Masse zu bewirken, die jedoch ausreichend groß ist, eine derart weitgehende Vernetzung zu bewirken, daß der Gelgehalt des resultierenden Elastomeren im Bereich von 10 bis 97 Gew.-%, bevorzugt 30 bis 95 Gew.-% und besonders bevorzugt 45 bis 95 Gew.-% liegt. Hierzu werden im allgemeinen Vernetzungsmittel-Mengen von 0,01 bis 2 Gew.-Teilen benötigt.

Der Gelgehalt wird nach Hydrolyse durch Extraktion mit Cyclohexan bei Raumtemperatur bestimmt.

Die dynamische Vulkanisation kann auf bekannte Weise auf handelsüblichen Kunststoff-Compoundiermaschinen, beispielsweise Zweischneckenknetern oder Buss-Co-Knetern, durchgeführt werden. Dabei können alle Komponenten vorgemischt und in den ersten Einzug dosiert werden. Eine weitere Möglichkeit ist die Dosierung des Thermoplasten in den ersten Einzug und die Zugabe des Kautschuks, des Vernetzungsmittels und ggf. weiterer Komponenten stromabwärts in die Schmelze. Dies hat den Vorteil, daß im Aufschmelzbereich der Maschine weniger Knetarbeit verrichtet werden muß und die Kautschukteilchen nicht zu klein gerieben werden. Größere Kautschukteilchen sind deswegen wünschenswert, weil sie wegen ihrer geringeren Oberfläche weniger Thermoplast zur Umhüllung benötigen. Hinsichtlich der Maschineneinstellung empfehlen sich langsame bis mittlere Drehzahlen bei niedrigen bis mittleren Durchsätzen.

Das so erhaltene Material besitzt Gummieigenschaften, kann dabei aber so verarbeitet werden, wie es für Thermoplasten üblich ist.

Die erfindungsgemäßen thermoplastischen Polyesterelastomere können mit Vorteil dort verwendet werden, wo mit erhöhter Temperaturbelastung zu rechnen ist, beispielsweise im Automobilbau. Gegenüber herkömmlichen, auf Polypropylen basierenden TPE's weisen sie neben dem Vorteil der höheren Wärmeformbeständigkeit auch eine verbesserte Lackierbarkeit auf. Darüber hinaus stellen sie beim Recycling von Teilen aus Polyestern bzw. Polyesterblends verträglichkeitsvermittelnde und zähigkeitsverbessernde Zusätze dar.

Im folgenden soll die Erfindung beispielhaft erläutert werden.

### Beispiele

Als Polyesterkomponenten wurden folgende Formmassen eingesetzt:
A: PBT-Copolyester aus 95 Mol-% 1,4-Butandiol, 5 Mol-% 1,4-Buten-2-diol als aliphatisch ungesättigte Diolkomponente und 100 Mol-% Dimethylterephthalat mit einer Lösungsviskosität von 105 cm³/g.
B: PBT-Polyester aus 1,4-Butandiol und Dimethylterephthalat mit einer Lösungsviskosität von 108 cm³/g.

Als EPDM-Kautschuk wurde BUNA Hüls AP 447 (Hüls AG, D-45764 Marl) mit einer Mooney-Viskosität ML (1 + 4) bei 100 °C von 85, einem Ethylengehalt von 70 % und acht Doppelbindungen pro 1 000 C-Atomen verwendet.

Als Vulkanisationsmittel wurde Luazo AP (Fa. Atochem Deutschland GmbH, Günzburg), ein 2,2'-Azodi(2-acetoxypropan), verwendet.

Die Einsatzstoffe wurden auf einer Zweiwellencompoundiermaschine ZE 25 der Fa. Berstorff, Hannover, bei einer Temperatur von 240 bis 250 °C schmelzegemischt und dynamisch vulkanisiert. Die Verweilzeit betrug etwa 3 bis 6 Minuten. Der Schmelzestrang wurde im Wasserbad abgekühlt, zu Granulat geschnitten und getrocknet.

Die so hergestellten Compounds wurden anschließend bei 250 °C spritzgegossen und geprüft. Das Rückstellverhalten wurde in der Art geprüft, daß die spritzgegossenen Schulterstäbe um 50 % gedehnt, anschließend ohne Zugbelastung bei Raumtemperatur 22 Stunden bzw. bei 80 °C eine Stunde gelagert und jeweils die bleibende Verformung bestimmt wurde.

### Beispiel 1:

Aus 25 Gew.-Teilen Copolyester A, einem Teil Vulkanisationsmittel und 75 Gew.-Teilen Kautschuk wurde eine Schmelzemischung in der oben beschriebenen Art und Weise hergestellt. Das thermoplastische Elastomer ergab einen E-Modul nach DIN 53 457 von 46 N/mm², eine Reißfestigkeit nach DIN 53 455 von 5 N/mm² und eine Reißdehnung von 81 %. Das Rückstellvermögen betrug bei Lagerung bei 23 °C 89 %, bei 80 °C 98 %.

### Beispiel 2:

Aus 10 Gew.-Teilen Copolyester A, 15 Gew.-Teilen Polyester B, einem Teil Vulkanisationsmittel und 75 Gew.-Teilen Kautschuk wurde eine Schmelzemischung in der oben beschriebenen Art und Weise hergestellt. Das thermoplastische Elastomer ergab einen E-Modul nach DIN 53 457 von 51 N/mm², eine Reißfestigkeit nach DIN 53 455 von 6 N/mm² und eine Reißdehnung von 91 %. Das Rückstellvermögen betrug bei 23 °C 85 %, bei 80 °C 98 %.

### Beispiel 3:

Aus 10 Gew.-Teilen Copolyester A, 15 Gew.-Teilen Polyester B, 0,3 Gew.-Teilen Vulkanisationsmittel und 75 Gew.-Teilen Kautschuk wurde eine Schmelzemischung in der oben beschriebenen Art und Weise hergestellt. Das thermoplastische Elastomer ergab einen E-Modul nach DIN 53 457 von 70 N/mm², eine Reißfestigkeit nach DIN 53 455 von 6 N/mm² und eine Reißdehnung von 78 %. Das Rückstellvermögen betrug bei 23 °C 83 %, bei 80 °C 92 %.

### Vergleichsbeispiel 1:

Aus 25 Gew.-Teilen Polyester B, einem Teil Vulkanisationsmittel und 75 Gew.-Teilen Kautschuk wurde eine Schmelzemischung in der oben beschriebenen Art und Weise hergestellt. Das Compound ergab einen E-Modul nach DIN 53 457 von 86 N/mm², eine Reißfestigkeit nach DIN 53 455 von 7 N/mm² und eine Reißdehnung von 52 %. Das Rückstellvermögen betrug bei 23 °C 51 %, bei 80 °C 68 %.

## Patentansprüche

1. Thermoplastisches Elastomer, hergestellt durch dynamische Vulkanisation eines Gemisches, das folgende Komponenten enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels.

2. Thermoplastisches Elastomer gemäß Anspruch 1,
dadurch gekennzeichnet,
daß bis zu 90 Gew.-% und bevorzugt bis zu 70 Gew.-% des EP(D)M-Kautschuks durch andere Kautschuke ersetzt ist.

3. Thermoplastisches Elastomer gemäß einem der vorhergehenden Ansprüche,
dadurch gekennzeichnet,
daß der Polyester der Komponente b) auf Basis von Terephthalsäure und einer Diolkomponente aufgebaut ist, die zu 0 bis 99,9 Mol-% aus Butandiol-(1,4) und zu 0,1 bis 100 Mol-% aus Butendiol-1,4 besteht.

4. Thermoplastisches Elastomer gemäß Anspruch 3,
dadurch gekennzeichnet,
daß der Gehalt an Butandiol-(1,4) 50 bis 99 Mol-% und der Gehalt an Butendiol-(1,4) 1 bis 50 Mol-% beträgt.

5. Thermoplastisches Elastomer gemäß einem der vorhergehenden Ansprüche,
dadurch gekennzeichnet,
daß der Polyester der Komponente c) ein Poly(alkylenterephthalat) und bevorzugt ein Poly(ethylenterephthalat) oder ein Poly(butylenterephthalat) ist.

6. Thermoplastisches Elastomer gemäß einem der vorhergehenden Ansprüche,
dadurch gekennzeichnet,
daß es bis zu 25 Gew.-Teile, bezogen auf 100 Gew.-Teile Kautschuk, weitere Zusätze enthält.

7. Thermoplastisches Elastomer gemäß einem der vorhergehenden Ansprüche,
dadurch gekennzeichnet,
daß es einen Gelgehalt im Bereich von 10 bis 97 Gew.-%, bevorzugt im Bereich von 30 bis 95 Gew.-% und besonders bevorzugt im Bereich von 45 bis 95 Gew.-% aufweist.

8. Thermoplastisches Elastomer gemäß einem der vorhergehenden Ansprüche,
dadurch gekennzeichnet,
daß das Vernetzungsmittel in einer Menge von 0,01 bis 2 Gew.-Teilen eingesetzt wird.

9. Verfahren zur Herstellung eines thermoplastischen Elastomers entsprechend einem der vorhergehenden Ansprüche,
dadurch gekennzeichnet,
daß man ein Gemisch, das folgende Komponenten enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels,
der dynamischen Vulkanisation unterwirft.
